# EUROPÄISCHE PATENTSCHRIFT

(11) **EP 1 766 355 B1**
(45) Veröffentlichungstag und Bekanntmachung des Hinweises auf die Patenterteilung: **14.09.2011**
(21) Anmeldenummer: 05769969.6
(22) Anmeldetag: 07.07.2005
(51) Int. Cl.: G01L 5/10, B65H 59/40

(54) **TENSIOMETER**
TENSIOMETER
TENSIOMETRE

(30) Priorität: 14.07.2004 DE 102004034006
(43) Veröffentlichungstag der Anmeldung: 28.03.2007
(73) Patentinhaber: IRO Aktiebolag, 52322 Ulricehamn (SE)
(72) Erfinder: LAMPRILLO, Stefano, I-13900 Biella (IT)
(74) Vertreter: Grünecker, Kinkeldey, Stockmair & Schwanhäusser Anwaltssozietät
(86) Internationale Anmeldenummer: PCT/EP2005/007365
(87) Internationale Veröffentlichungsnummer: WO 2006/005518

(56) Entgegenhaltungen:
- EP-A- 0 475 001
- DE-A1- 3 609 623
- DE-U1- 9 000 443
- US-A- 4 110 654
- US-A- 6 095 449
- US-B1- 6 691 744

## Beschreibung

Die Erfindung betrifft einen Tensiometer der im Oberbegriff des Anspruchs 1 angegebenen Art.

Der aus DE 102 49 278 (WO 2004/039714 A) bekannte Tensiometer weist als Dämpfungseinrichtung einen Viskosedämpfer auf. Ein an der Unterseite des Biegeelementes starr angebrachter Stift taucht berührungsfrei in einen relativ zum Biegeelement stationär angeordneten Hohlraum ein, in dem eine Dämpfungsflüssigkeit enthalten ist.

Bei dem aus DE 90 00 443 U bekannten Tensiometer ist eine temperaturunabhängige, elastische und hochdämpfende Masse direkt am Biegeelement verankert. Die Masse besteht beispielsweise aus Fluor-Kautschuk. Die Position der Masse ist in Längsrichtung des Biegeelements verstellbar, um die Dämpfwirkung einzustellen bzw. auf eine bestimmte Frequenz abzustimmen.

Der aus US 6095 449 bekannte Tensionsmeter weist als Dämpfungseinrichtung eine viskose Flüssigkeit und eine Masse auf.

Der Erfindung liegt die Aufgabe zugrunde, einen Tensiometer der eingangs genannten Art anzugeben, der baulich einfach, kostengünstig und effizient gegen vom Faden und Umgebungseinflüssen induzierte Schwingungen relativ zur Einspannstelle gedämpft ist.

Die gestellte Aufgabe wird mit den Merkmalen des Anspruchs 1 gelöst.

Bei Schwingungen des Biegeelementes relativ zur Einspannstelle wird die Tilgermasse ebenfalls zu vom Federkörper zugelassenen Schwingungen angeregt. Bei entsprechender Abstimmung zwischen dem Biegeelement, dem Federkörper und der Tilgermasse löschen die Eigenschwingungen der Tilgermasse die Schwingungen des Biegeelements weitgehend aus, weil der Federkörper permanent Schwingungsenergie aufzehrt. Der Tensiometer ist baulich einfach und kostengünstig herstellbar, weil der Federkörper und die Tilgermasse einfache und kostengünstige Teile und leicht am Biegeelement anzubringen sind.

Bei einer bevorzugten Ausführungsform ist die Tilgermasse substantiell kleiner als die Masse des Biegeelements außerhalb der Einstandsstelle. Dadurch löscht die Dämpfeinrichtung Schwingungen des Biegeelements wirksam aus, ohne die Gesamtmasse exzessiv zu vergrößern.

Bei einer bevorzugten Ausführungsform ist die Resonanzfrequenz des Federkörpers und der Tilgermasse zumindest weitgehend entsprechend der Resonanzfrequenz des Biegeelements eingestellt. Auf diese Weise werden Resonanzschwingungen des Biegeelements wirksam und rasch abgedämpft, so dass bei der Auswertung der Signale des Sensorelements wenig elektronischer Aufwand erforderlich ist. Beispielsweise hat die Dämpfungseinrichtung eine Resonanzfrequenz von ungefähr 1 KHz.

Die Wirkung der Dämpfungseinrichtung setzt unmittelbar ein, wenn das Biegeelement die Tendenz entwickelt, unter Resonanz zu schwingen, falls die Tilgermasse nahe dem vom Faden beaufschlagten Ende am Biegeelement angeordnet ist.

Baulich einfach ist der Federkörper ein Schaumstoff-, Gummi- oder Elastomerkörper mit Eigendämpfung. Hingegen kann die Tilgermasse ein Metallblech oder eine Metallfolie ohne Eigendämpfung sein.

Herstellungstechnisch zweckmäßig ist der Federkörper an das Biegeelement angeklebt, und ist die Tilgermasse an den Federkörper angeklebt, so dass keine direkte Verbindung zwischen der Tilgermasse und dem Biegeelement entsteht.

Besonders einfach kann der Federkörper ein Schaumstoff-, Gummi- oder Elastomerstreifen sein, während die Tilgermasse ein Blech- oder Folienstreifen ist.

Schließlich ist es zweckmäßig, wenn bei einer Ausführungsform die Dämpfungseinrichtung aus dem Federkörper und der Tilgermasse so gewählt wird, dass die Schwingungsamplitude der Tilgermasse größer, vorzugsweise wesentlich größer, ist als die Schwingungsamplitude des Biegeelements an der Anbringungsstelle der Tilgermasse.

Anhand der Zeichnung wird eine Ausführungsform der Erfindung erläutert.

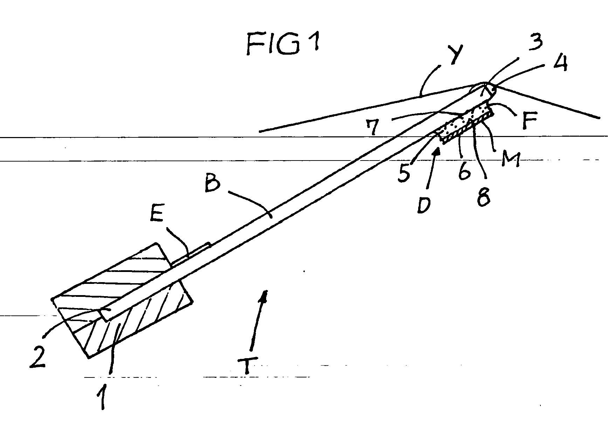

Die Fig. 1 zeigt eine schematische Seitenansicht von Hauptkomponenten eines Tensiometers T zum Messen der Fadenspannung eines Fadens Y (eines laufenden und/oder stehenden Fadens Y).

Der Tensiometer T enthält ein Biegeelement B, beispielseis einen Keramikarm, der an einem Ende 2 in einer stationären Einspannstelle 1 festgelegt ist und sich mit seinem anderen, freien Ende 3 zum Faden Y erstreckt. Am Ende 3 kann eine für den Faden schonende Abdeckung 4 angebracht sein, an der der Faden Y umgelenkt wird, um die Reaktionskraft aus der Fadenspannung auf das Biegeelement B zu übertragen. Auf dem Biegeelement ist ferner, zweckmäßigerweise bei der Einspannstelle 1, ein Sensorelement E angeordnet, as aus der Biegung des Biegeelements B ein die Fadenspannung repräsentierendes Signal ableitet. Das Sensorelement E kann an nur einer Seite oder an beiden Seiten des Biegeelements B angeordnet sein, und/oder zum Teil auch in der Einspannstelle oder an einem über die Einspannstelle 1 hinaus verlängerten Ende des Biegeelements B.

Der Tensiometer T ist erfindungsgemäß mit einer Dämpfungseinrichtung D ausgestattet, die aus einem Ferkörper F und einer davon getragenen Tilgermasse M bestesht. Die Dämpfungseinrichtung D ist beispielsweise an der dem Faden Y abgewandten Unterseite des Biegeelements B nahe dem Ende 3 angeordnet. Das Federelement F kann ein Körper aus einem Schaumstoff, aus Gummi oder einem Elastomer mit Eigendämpfung sein, der bei 7 an die Unterseite des Biegeelements B angeklebt ist. Die Tilgermasse M kann ein Metallblech oder eine Metallfolie sein, zweckmäßigerweise ein ebener Streifen 6, der bei 8 an den Federkörper F angeklebt ist, ohne die Möglichkeit, mit dem Biegeelement B in direkten Kontakt zu kommen.

Die Tilgermasse M ist substantiell kleiner als die Masse des Biegeelements außerhalb der Einspannstelle 1. Die durch den Federkörper F zugelassene Schwingungsamplitude der Tilgermasse M relativ zum Biegeelement B ist bei einer bevorzugten Ausführungsform zweckmäßigerweise größer und vorzugsweise sogar erheblich größer als die Schwingungsamplitude des Biegeelements an der Anbringungsstelle der Dämpfungseinrichtung D. Zweckmäßigerweise ist ferner gegebenenfalls die Resonanzfrequenz des Federkörpers F und der Tilgermasse M in etwa gleich eingestellt wie die Resonanzfrequenz des Biegeelements B. Diese Resonanzfrequenz kann beispielsweise etwa 1 KHz betragen.

Sobald das Biegeelement unter dem Einfluss von Variationen der Fadenspannung und/oder der Reibung des Fadens Y am Biegeelenment B und/oder durch äußere Einflüsse bewirkte Erregung relativ zur Einspannstelle 1 zu schwingen beginnt und in eine Resonanzschwingung zu kommen droht, wird auch die Tilgermasse M zu Schwingungen relativ zum Biegeelement B angeregt. Die Schwingungen der Tilgermasse M werden durch die Elastizität des Federkörpers F zugelassen. Zumindest ein Großteil der durch die relativen Schwingungen des Biegeelements und der Tilgermasse M in den Federkörper F eingeleitete Schwingungsenergie wird darin durch die Eigendämpfung aufgezehrt. Damit lassen sich Resonanzschwingungen des Biegeelementes bei entsprechender Abstimmung zwischen dem Biegeelement B und der Dämpfungseinrichtung D weitgehend auslöschen.

## Patentansprüche

1. Tensiometer (T) zum Messen der Fadenspannung, mit einem Biegeelement (B), das an einem Ende (2) eingespannt, am anderen Ende (3) vom Faden (Y) beaufschlagbar ist, und wenigstens ein Sensorelement (E) trägt, und mit einer Dämpfungseinrichtung (D) für Schwingungen des Biegeelements (B), **dadurch gekennzeichnet, dass** die Dämpfungseinrichtung (D) wenigstens eine mit einem Federkörper (F) am Biegeelement (B) befestigte Tilgermasse (M) aufweist.

2. Tensiometer nach Anspruch 1, **dadurch gekennzeichnet, dass** die Tilgermasse (M) substantiell kleiner ist als die außerhalb der Einspannstelle (1) vorliegende Masse des Biegeelements (B).

3. Tensiometer nach Anspruch 1, **dadurch gekennzeichnet, dass** die Resonanzfrequenz des Federkörpers (F) und der Tilgermasse (M) zumindest weitgehend der Resonanzfrequenz des Biegeelements (B) entspricht.

4. Tensiometer nach Anspruch 1, **dadurch gekennzeichnet, dass** die Tilgermasse (M) nahe dem vom Faden (Y) beaufschlagbaren Ende (3) des Biegeelements (B) angeordnet ist.

5. Tensiometer nach Anspruch 1, **dadurch gekennzeichnet, dass** der Federkörper (F) ein Schaumstoff-, Gummi- oder Elastomerkörper (5) mit Eigendämpfung ist.

6. Tensiometer nach Anspruch 1, **dadurch gekennzeichnet, dass** die Tilgermasse (M) ein Metallblech oder eine Metallfolie (6) ohne Eigendämpfung ist.

7. Tensiometer nach Anspruch 1, **dadurch gekennzeichnet, dass** der Federkörper (F) an das Biegeelement (B) und die Tilgermasse (M) an den Federkörper (F) geklebt sind.

8. Tensiometer nach Anspruch 1, **dadurch gekennzeichnet, dass** der Federkörper (F) ein Schaumstoff-, Gummi- oder Elastomerstreifen und die Tilgermasse (M) ein Blech- oder Folienstreifen sind.

9. Tensiometer nach Anspruch 1, **dadurch gekennzeichnet, dass** die Schwingungsamplitude der Tilgermasse (M) größer, vorzugsweise substantiell größer, ist als die Schwingungsamplitude des Biegeelements (B) an der Anbringungsstelle der Tilgermasse (M).

## Claims

1. A tensiometer (T) for measuring the tension of a yarn (Y), comprising a bending element (B) being fixed at one end (2) and being actuated by the yarn (Y) at another end (3), and carrying at least one sensor element (E), and a damping device (D) for damping oscillations of the bending element (B), **characterized in that** the damping device (D) comprises at least one absorbing mass (M) fixed at the bending element (B) by means of a spring body (F).

2. A tensiometer according to claim 1, **characterized in that** the absorbing mass (M) is substantially smaller than the mass of the bending element (B) outside of the fixing location (1).

3. A tensiometer according to claim 1, **characterized in that** a resonancy frequency of the spring body (F) plus of the absorbing mass (M) corresponds at least largely with the resonance frequency of the bending element (B).

4. A tensiometer according to claim 1, **characterized in that** the absorbing mass (M) is arranged close to the end (3) of the bending element (B) which end (3) is actuated by the yarn (Y).

5. A tensiometer according to claim 1, **characterized in that** the spring body (F) is a body made of plastic foam material, rubber, or elastomeric material, having an intrinsic damping property.

6. A tensiometer according to claim 1, **characterized in that** the absorbing mass (M) is a sheet metal or a metal foil (6) without intrinsic damping property.

7. A tensiometer according to claim 1, **characterized in that** the spring body (F) is glued to the bending element (B) and that the absorbing mass (M) is glued to the spring body (F).

8. A tensiometer according to claim 1, **characterized in that** the spring body (F) is a strip of a plastic foam material or of rubber or of elastic material, and that the absorbing mass (M) is a strip of sheet metal or a metal foil.

9. A tensiometer according to claim 1, **characterized in that** the amplitude of oscillations of the absorbing mass (M) is larger, preferably substantially larger, than the amplitude of oscillations of the bending element (B) at the location where the absorbing mass (M) is provided.

## Revendications

1. Tensiomètre (T) pour mesurer la tension de fil, comprenant un élément de flexion (B), qui est tendu sur une extrémité (2), peut être alimenté sur l'autre extrémité (3) par du fil (Y), et porte au moins un élément capteur (E), et un dispositif d'amortissement (D) pour des oscillations de l'élément de flexion (B), **caractérisé en ce que** le dispositif d'amortissement (D) présente au moins une masse d'amortissement (M) fixée par un corps à ressort (F) sur l'élément de flexion (B).

2. Tensiomètre selon la revendication 1, **caractérisé en ce que** la masse d'amortissement (M) est substantiellement inférieure à la masse, présente à l'extérieur du point de serrage (1), de l'élément de flexion (B).

3. Tensiomètre selon la revendication 1, **caractérisé en ce que** la fréquence de résonance du corps à ressort (F) et de la masse d'amortissement (M) correspond au moins largement à la fréquence de résonance de l'élément de flexion (B).

4. Tensiomètre selon la revendication 1, **caractérisé en ce que** la masse d'amortissement (M) est disposée à proximité de l'extrémité (3), pouvant être alimentée par le fil (Y), de l'élément de flexion (B).

5. Tensiomètre selon la revendication 1, **caractérisé en ce que** le corps à ressort (F) est un corps en mousse, en caoutchouc ou en élastomère (5) avec auto-amortissement.

6. Tensiomètre selon la revendication 1, **caractérisé en ce que** la masse d'amortissement (M) est une tôle métallique ou un film métallique (6) sans auto-amortissement.

7. Tensiomètre selon la revendication 1, **caractérisé en ce que** le corps à ressort (F) et la masse d'amortissement (M) sont collés respectivement sur l'élément de flexion (B) et sur le corps à ressort (F).

8. Tensiomètre selon la revendication 1, **caractérisé en ce que** le corps à ressort (F) est une bande en mousse, une bande en caoutchouc ou une bande en élastomère et la masse d'amortissement (M) est une bande de tôle ou une bande de film.

9. Tensiomètre selon la revendication 1, **caractérisé en ce que** l'amplitude d'oscillation de la masse d'amortissement (M) est supérieure, de préférence substantiellement supérieure, à l'amplitude d'oscillation de l'élément de flexion (B) au point d'application de la masse d'amortissement (M).
